(19) Europäisches Patentamt
European Patent Office
Office européen des brevets

(11) **EP 4 446 955 A1**

(12) # EUROPEAN PATENT APPLICATION

(43) Date of publication:
**16.10.2024 Bulletin 2024/42**

(21) Application number: **23167784.0**

(22) Date of filing: **13.04.2023**

(51) International Patent Classification (IPC):
*G06Q 10/06* (2023.01)  *F24F 1/00* (2019.01)
*F24F 11/46* (2018.01)  *G06Q 10/063* (2023.01)
*G06Q 10/0631* (2023.01)  *G06Q 50/06* (2024.01)
*G16Y 10/35* (2020.01)  *G16Y 20/10* (2020.01)
*G16Y 20/30* (2020.01)  *F24F 130/10* (2018.01)
*F24F 140/60* (2018.01)

(52) Cooperative Patent Classification (CPC):
**G06Q 10/06; F24F 11/46; G06Q 10/063;
G06Q 10/06313; G06Q 50/06; G16Y 10/35;
G16Y 20/10; G16Y 20/30;** F24F 2110/10;
F24F 2110/12

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Robert Bosch GmbH
70442 Stuttgart (DE)**

(72) Inventors:
• **Bhuiyan, Shihabul
573943 Singapur (SG)**
• **Tanyildiz, Baris
574036 Singapore (SG)**

(54) **METHOD AND SYSTEM FOR ESTIMATING POWER CONSUMPTION OF A HEATING, VENTILATION AND AIR CONDITIONING SYSTEM**

(57) A method for estimating power consumption of a heating, ventilation and air conditioning (HVAC) system in a building comprising: a step of collecting HVAC data of the HVAC system by a HVAC data collector; a step of obtaining, by a processor, a first power consumption data of the HVAC system based on a plurality of capacity tables of the HVAC system and the collected HVAC data; a step of obtaining, by the processor, a second power consumption data of the HVAC system based on the first power consumption data, the HVAC data, and a correction factor model, for estimating the power consumption of the HVAC system.

FIG. 1

EP 4 446 955 A1

## Description

### TECHNICAL FIELD

This disclosure relates to a method and a system for estimating power consumption of a heating, ventilation and air conditioning (HVAC) system in a building.

### BACKGROUND

Currently, it is required to provide information of power consumption (or energy consumption) of a heating, ventilation and air conditioning (HVAC) system in buildings during their operation for billing or energy management services. As the energy bills are increasing and efficiency is becoming more and more important within the arena of sustainable HVAC applications, energy management is getting more important. Energy management and planning requires accurate power consumption information of the HVAC systems.

The power consumption of the HVAC systems can be measured by, for example, power meters. However, a power meter, and the cost of installation of the power meter is relatively high.

Apart from measuring the power consumption using power meters, the power consumption of the HVAC system can be estimated using thermal cycle running parameters. However, using thermal cycle running parameters to estimate the power consumption has a certain ratio of error that is around 10% due to cycle sensor reading errors and prediction related errors.

Reverse carnot or cooling cycle can also be used to estimate the power consumption of the HVAC system. However, using reverse carnot or cooling cycle to estimate the power consumption requires measurement from multiple data points and relatively large set of data to calculate exact refrigerant mass flow rate, thermal state (liquid or gas) and oil dilation ratio. This method for estimating the power consumption is relatively less accurate due to the sensitivity of the sensors.

Suppliers or manufacturers of the HVAC system provides product data book (PDB) of each HVAC model which contains information or capacity tables about the product running data at certain indoor/outdoor temperature conditions. These capacity tables contain the electricity power input, cooling and/or heating capacity that are based on various combinations of indoor and outdoor air temperatures. The capacity tables for the power input of the HVAC system are typically defined as one or more multivariable functions of indoor temperature and outdoor temperature. Using performance test results of HVAC systems that are released/shared by manufacturer to obtain power consumption estimate is based on standard or controlled laboratory conditions, standard piping lengths (indoor-outdoor unit connection piping).

However, in practice, the HVAC systems are installed and operated under non-standard operating conditions, which may include factors such as clogging of filters, bad installation or additional refrigerant gas charge load which are not taken into account in the performance test results.

When the HVAC system is installed and operated under the non-standard operating conditions, the capacity tables for the power input of the HVAC system are not able to accurately determine the actual power consumption of the HVAC system. For instance, factors such as copper piping length could cause the power consumption of the HVAC system to be different than what is defined within the capacity tables. Other factors such as the amount of refrigerant gas charge would also directly affect the compressor running frequency of the HVAC system, and hence affect the power consumption of the HVAC system.

A solution is needed to provide an improved method for estimate the power consumption of the HVAC system.

### SUMMARY

This disclosure was conceptualized to assist in estimating power consumption (or energy consumption) of a heating, ventilation and air conditioning (HVAC) system in a building. The HVAC system can include components such as a furnace, boiler, damper, zone-valve, mixing valve, air source heat pump, ground source heat pump, hydronic heater, forced air heater, energy recovery ventilation (ERV), heat recovery ventilation (HRV), electrical resistance heating, central air conditioning, mini-split air conditioner, portable air conditioner, small diameter/high velocity (SDHV) heating/cooling system, humidification, dehumidification, or any other suitable HVAC equipment. The HVAC system can comprise an evaporator, a compressor, a condenser, an indoor fan and an outdoor fan. The indoor fan can pull warm indoor air from indoor areas, and the warm indoor air can pass over the evaporator coil. As the liquid refrigerant inside the evaporator coil converts to gas, heat from the indoor air can be absorbed into the refrigerant, thus cooling the indoor air as it passes over the evaporator coil. Then the indoor fan can pump the chilled indoor air back into the indoor areas. The refrigerant gas can pass into the compressor. The compressor can pressurize the refrigerant gas and send the refrigerant gas into the condenser coil. An outdoor fan can pull outdoor air through the condenser coil, allowing the outdoor air to absorb heat from the refrigerant gas and release it outside. During the process, the refrigerant can be converted back to a liquid. Then the liquid refrigerant can flow back to the evaporator coil and the cold refrigerant can absorb more heat from the indoor air and the cycle can continue.

The problem to be solved is development of a meterless power consumption estimation method that is based on parameters from air conditioning thermal cycle such as base-product test results, compressor data/specification sheets such as compressor running frequency and motor power consumption.

A technical solution is provided in the form of a method and system for estimating power consumption of a HVAC system in a building.

The method for estimating power consumption of a heating, ventilation and air conditioning (HVAC) system in a building comprising: a step of collecting HVAC data of the HVAC system by a HVAC data collector; a step of obtaining, by a processor, a first power consumption data of the HVAC system based on a plurality of capacity tables of the HVAC system and the collected HVAC data; a step of obtaining, by the processor, a second power consumption data of the HVAC system based on the first power consumption data, the HVAC data, and a correction factor model, for estimating the power consumption of the HVAC system.

The system for estimating power consumption of a heating, ventilation and air conditioning (HVAC) system in a building comprising: a HVAC data collector 110 configured to collect HVAC data of the HVAC system; a processor configured to: obtain a first power consumption data of the HVAC system based on a plurality of capacity tables of the HVAC system and the collected HVAC data; obtain a second power consumption data of the HVAC system based on the first power consumption data, the HVAC data, and a correction factor model, for estimating the power consumption of the HVAC system.

Another aspect of the disclosure relates to various embodiments of a computer program product. The computer program product comprising instructions which, when the program is executed by a computer, cause the computer to carry out: a step of obtaining a first power consumption data of the HVAC system based on a plurality of capacity tables and HVAC data of the HVAC system, wherein the HVAC data is collected by a HVAC data collector; a step of obtaining a second power consumption data of the HVAC system based on the first power consumption data, the HVAC data, and a correction factor model, for estimating the power consumption of the HVAC system.

Another aspect of the disclosure relates to various embodiments of a non-transitory computer-readable storage medium. The non-transitory computer-readable storage medium comprising instructions which, when executed by a computer, cause the computer to carry out: a step of obtaining a first power consumption data of the HVAC system based on a plurality of capacity tables and HVAC data of the HVAC system, wherein the HVAC data is collected by a HVAC data collector; a step of obtaining a second power consumption data of the HVAC system based on the first power consumption data, the HVAC data, and a correction factor model, for estimating the power consumption of the HVAC system.

The dependent claims define some examples associated with the system and method, respectively.

The technical solution provided in the present disclosure avoid the cost of power meter devices, datalogging devices and current sensors for direct reading power consumption as well as the cost of installing the devices. The estimation method helps to save time and effort in data acquisition and computing. Furthermore, the method in the present disclosure is more accurate (about 10% less error) in estimating the power consumption compared to the prior art methods.

**BRIEF DESCRIPTION OF THE DRAWINGS**

The present disclosure will be better understood with reference to the detailed description when considered in conjunction with the non-limiting examples and the accompanying drawings, in which:

- FIG. 1 shows a schematic illustration of the system for estimating power consumption of a heating, ventilation and air conditioning (HVAC) system in a building;
- FIG. 2 is a flow chart depicting a process of obtaining a second power consumption data of the HVAC system according to some embodiments;
- FIG. 3 is a flow chart depicting a process of training a correction factor model;
- FIG.4 is a flow chart depicting a method for estimating power consumption of a HVAC system in a building.

**DETAILED DESCRIPTION**

The following detailed description refers to the accompanying drawings that show, by way of illustration, specific details and embodiments in which the disclosure may be practiced. These embodiments are described in sufficient detail to enable those skilled in the art to practice the disclosure. Other embodiments may be utilized and structural, and logical changes may be made without departing from the scope of the disclosure. The various embodiments are not necessarily mutually exclusive, as some embodiments can be combined with one or more other embodiments to form new embodiments.

Embodiments described in the context of one of the systems or methods are analogously valid for the other systems or methods.

Features that are described in the context of an embodiment may correspondingly be applicable to the same or similar features in the other embodiments. Features that are described in the context of an embodiment may correspondingly be applicable to the other embodiments, even if not explicitly described in these other embodiments. Furthermore, additions and/or combinations and/or alternatives as described for a feature in the context of an embodiment may correspondingly be applicable to the same or similar feature in the other embodiments.

In the context of various embodiments, the articles "a", "an" and "the" as used with regard to a feature or element include a reference to one or more of the features or elements.

As used herein, the term "and/or" includes any and all combinations of one or more of the associated listed items.

As used herein, the term "data" may be understood to include information in any suitable analog or digital form, for example, provided as a file, a portion of a file, a set of files, a signal or stream, a portion of a signal or stream, a set of signals or streams, and the like. The term data, however, is not limited to the aforementioned examples and may take various forms and represent any information as understood in the art.

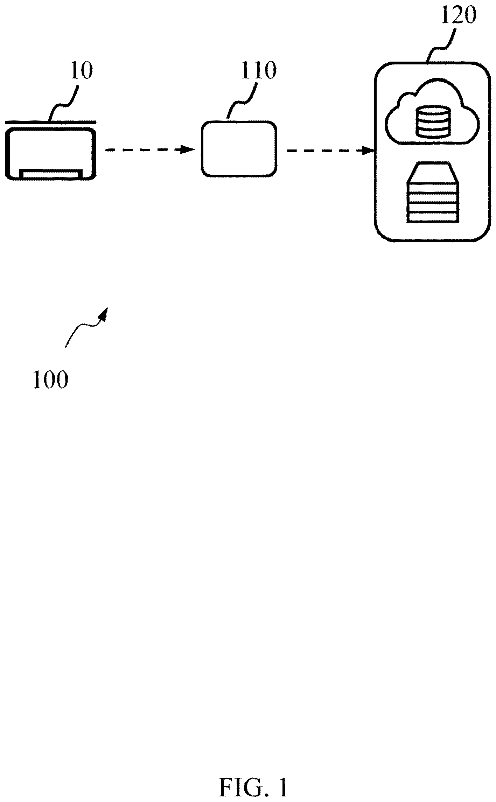

According to an aspect of the disclosure, a system 100 is provided for estimating power consumption of a heating, ventilation and air conditioning (HVAC) system 10 in a building. FIG. 1 shows a schematic illustration of the system 100.

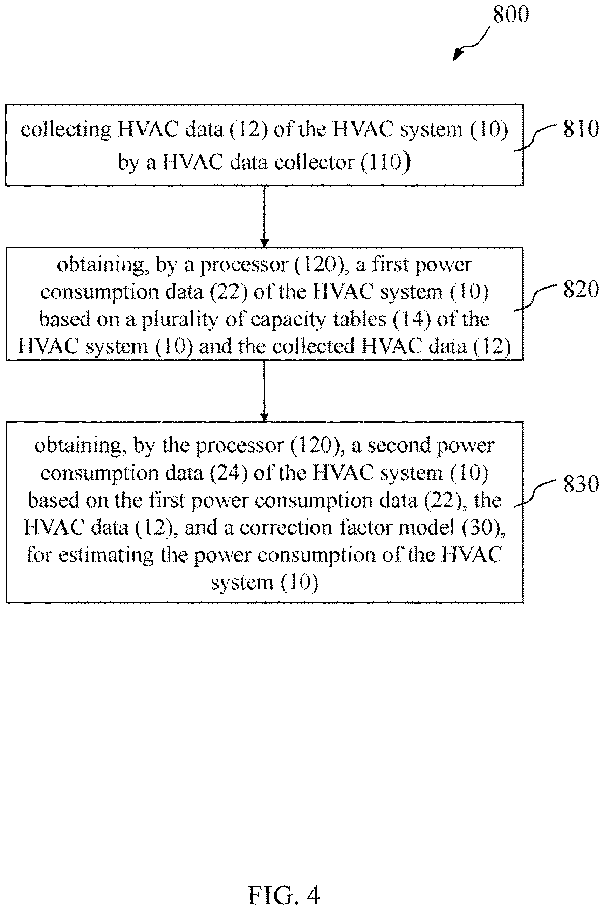

According to another aspect of the disclosure, a method 800 is provided for estimating power consumption of a heating, ventilation and air conditioning (HVAC) system 10 in a building. FIG. 4 is a flow chart depicting the method 800.

As shown in FIG. 1, the system 100 comprises a HVAC data collector 110, and a processor 120. The system 100 is configured to implement the method 800 of FIG. 4. The HVAC data collector 110 can comprise a cycle data transmission gateway. The processor 120 can comprise a local server and/or a cloud server.

The HVAC data collector 110 can be configured to collect HVAC data 12 of the HVAC system 10. The HVAC data 12 can comprise indoor air temperature, outdoor air temperature and set temperature. The HVAC data 12 can also comprise fan speed, compressor running frequency and indoor relative humidity ratio.

The processor 120 can be configured to obtain a first power consumption data 22 of the HVAC system 10 using a plurality of capacity tables 14 of the HVAC system 10 from the supplier/manufacturer and the collected HVAC data 12. The capacity tables 14 can provide laboratory conditions performance data including power input, cooling and/or heating capacity, and compressor running frequency value for various combination of indoor air temperature, outdoor air temperature and set temperature. In some embodiments, the at least one power input values, cooling and/or heating capacity values, and compressor running frequency values for various combination of indoor air temperature, outdoor air temperature and set temperature of the capacity tables 14 of the HVAC system 10 can be obtained based on at least one statistical regression multivariable models.

For example, the product capacity tables 14 can be used as a database for power input, heating/cooling capacity, compressor running frequency, indoor air temperature, outdoor air temperature and set temperature for 4 cooling test conditions (i.e., when outdoor temperatures are 35°C, 30°C, 25°C, 20°C) and 7 heating test conditions (i.e., when outdoor temperatures are 10°C, 7°C, 1°C, -5°C, bivalent and lowest heating temperature).

Table 1 shows an example of a generic capacity table of a HVAC system 10 for set temperature of 18°C from the supplier/manufacturer. Tindoor represents indoor air temperature. Toutdoor represents outdoor air temperature. The dry bulb temperature is the ambient air temperature that is measured by regular thermometers, while the wet bulb temperature is measured by thermometers that are wrapped in wetted wicks. Qcooling represents cooling capacity. Compr. HZ represents expected compressor running frequency.

| | | ← Tindoor (dry bulb / wet bulb) → | | | | | |
|---|---|---|---|---|---|---|---|
| | | 18°C | 20°C | 22°C | 24°C | 27°C | 30°C |
| ← Toutdoor (dry bulb /wet bulb) → | 20°C/18°C | Qcooling: | Qcooling: | Qcooling: | Qcooling: | Qcooling: | Qcooling: |
| | | Power input: | Power input: | Power input: | Power input: | Power input: | Power input: |
| | | Compr. HZ: | Compr. HZ: | Compr. HZ: | Compr. HZ: | Compr. HZ: | Compr. HZ: |
| | 25°C/20°C | Qcooling: | Qcooling: | Qcooling: | Qcooling: | Qcooling: | Qcooling: |
| | | Power input: | Power input: | Power input: | Power input: | Power input: | Power input: |
| | | Compr. HZ: | Compr. HZ: | Compr. HZ: | Compr. HZ: | Compr. HZ: | Compr. HZ: |
| | 27°C/21°C | Qcooling: | Qcooling: | Qcooling: | Qcooling: | Qcooling: | Qcooling: |
| | | Power input: | Power input: | Power input: | Power input: | Power input: | Power input: |
| | | Compr. HZ: | Compr. HZ: | Compr. HZ: | Compr. HZ: | Compr. HZ: | Compr. HZ: |
| | 35°C/27°C | Qcooling: | Qcooling: | Qcooling: | Qcooling: | Qcooling: 3.2kW | Qcooling: |
| | | Power input: | Power input: | Power input: | Power input: | Power input: 1kWh | Power input: |
| | | Compr. HZ: | Compr. HZ: | Compr. HZ: | Compr. HZ: | Compr. HZ: 40 hertz | Compr. HZ: |

Table 1 A generic capacity table of a HVAC system 10 for set temperature of 18°C from the supplier/manufacturer

The first power consumption data 22 can be obtained by the processor 120 based on the capacity tables 14 of the HVAC system 10 and the collected HVAC data 12 including the indoor air temperature, the outdoor air temperature, and the set temperature. For example, when the indoor air temperature is 27°C, the outdoor air temperature is 35°C, and the set temperature is 18°C, the first power consumption data 22 as obtained from the capacity tables 14 is 1 kWh.

When the HVAC system 10 is installed and operated under standard operating conditions, the first power consumption data 22 determined by the capacity tables 14 of the HVAC system 10 and the collected HVAC data 12 can be used as the accurate power consumption data. For example, when the indoor air temperature is 27°C, the outdoor air temperature is 35°C, and the set temperature is 18°C, for the HVAC system 10 installed and operated under standard operating conditions, the first power consumption data 22 as obtained from the capacity tables 14, which is 1 kWh, can be used as the accurate power consumption of the HVAC system 10.

When the HVAC system 10 is installed and operated under the non-standard operating conditions such as clogging of filters, bad installation or additional refrigerant gas charge load, many parameters could be changed and thus affecting the power consumption of the HVAC system 10. For instance, parameters such as piping length or heat exchanger fouling rate could change the amount of refrigerant gas charge to be added to the HVAC system 10 and thus could cause the power consumption of the HVAC system 10 to be different from what is defined within the capacity tables 14. The amount of refrigerant gas charge can affect the compressor running frequency of the HVAC system 10, and hence affect the power consumption of the HVAC system 10.

When the HVAC system 10 is installed and operated under non-standard operating conditions, a corresponding correction factor 28 can be applied to each of the first power consumption data 22 to obtain the accurate power consumption of the HVAC system 10. For the same indoor air temperature (27°C), the same outdoor air temperature (35°C), and the same set temperature (18°C), when the HVAC system 10 is installed and operated under non-standard operating conditions, the actual compressor running frequency of the HVAC system 10 can be more than 40 hertz, e.g., 50 hertz. A corresponding correction factor 28 (i.e., 50/40) can be applied to the first power consumption data 22 (i.e., 1 kWh) to obtain the accurate power consumption of the HVAC system 10. For example, the first power consumption data 22 (i.e., 1 kWh) can be multiplied by the corresponding correction factor 28 (i.e., 50/40) to obtain the accurate power consumption of the HVAC system 10, which is (50/ 40) * 1 kWh.

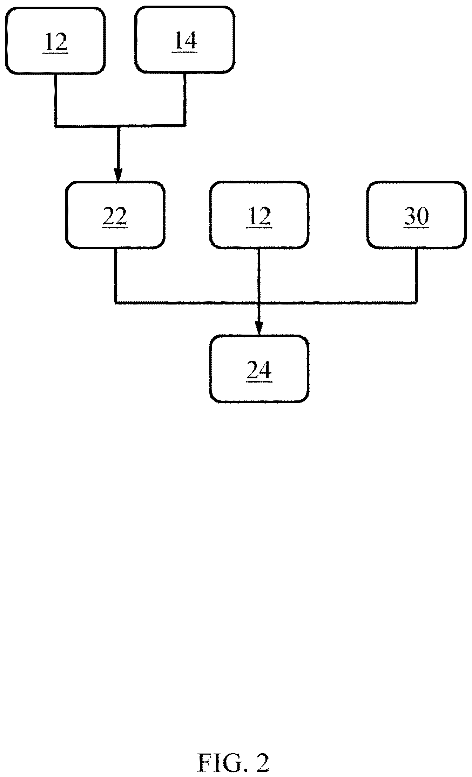

For a HVAC system 10 installed and operated under non-standard operating conditions, the processor 120 can be configured to obtain a second power consumption data 24 of the HVAC system 10 based on the first power consumption data 22, the HVAC data 12, and a correction factor model 30, for estimating the power consumption of the HVAC system 10. The obtained second power consumption data 24 of the HVAC system 10 can be used as the accurate power consumption of the HVAC system 10 installed and operated under non-standard operating conditions. FIG. 2 is a flow chart depicting a process of obtaining the second power consumption data of the HVAC system 10 based on the first power consumption data 22, the HVAC data 12, and the correction factor model 30.

A correction factor 28 can be obtained based on the HVAC data 12 including indoor air temperature, outdoor air temperature, set temperature, and the correction factor model 30. The first power consumption data 22 can be obtained based on the capacity tables 14 of the HVAC system 10 and the collected HVAC data 12 including indoor air temperature, outdoor air temperature, set temperature. The second power consumption data 24 can be obtained by applying the correction factor 28 to the first power consumption data 22, e.g., by multiplying the first power consumption data 22 by the correction factor 28.

In an example where the indoor air temperature is 27°C, the outdoor air temperature is 35°C, and the set temperature is 18°C, the correction factor 28 obtained from the correction factor model 30 is (70/60), the first power consumption data 22 obtained from the capacity tables 14 is 1 kWh, and the second power consumption data 24 is 1 kWh * (70/60), which is obtained by multiplying the first power consumption data 22 by the correction factor 28.

In another example where the indoor air temperature is 29°C, the outdoor air temperature is 32°C, and the set temperature is 18°C, the correction factor 28 obtained from the correction factor model 30 is (80/70), the first power consumption data 22 obtained from the capacity tables 14 is 0.9 kWh, and the second power consumption data 24 is 0.9 kWh * (80/70), which is obtained by multiplying the first power consumption data 22 by the correction factor 28.

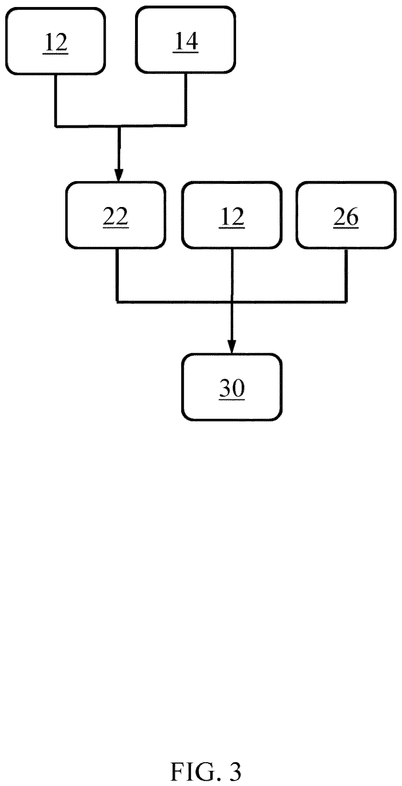

The correction factor model 30 can be trained by the processor 120 using the HVAC data 12, the first power consumption data 22 and a third power consumption data 26. FIG. 3 is a flow chart depicting a process of training the correction factor model 30 using the HVAC data 12, the first power consumption data 22 and a third power consumption data 26.

In some embodiments, the third power consumption data 26 can be obtained using indoor unit evaporator temperature, outdoor unit condenser temperature and compressor running frequency collected by the HVAC data collector 110 and AHRI 10 test-based coefficient polynomials. The processor 120 can be configured to formulate a look-up table to determine the third power consumption data 26 using the indoor unit evaporator temperature, the outdoor unit condenser temperature, the compressor running frequency and the AHRI 10 test-based coefficient polynomials.

In some embodiments, the third power consumption data 26 can be obtained using condenser capacity and evaporator capacity of the HVAC system 10. The processor 120 can be configured to obtain the third power consumption data 26 by calculating difference between the condenser capacity and the evaporator capacity of the HVAC system 10.

The condenser capacity (represented as Qc) and the evaporator capacity (represented as Qe) of the HVAC system 10 can be calculated by the following equations:

$$Qc = m\_air * cp * (T\_air\_out - Tcond)$$

$$Qe = m\_air * cp * (T\_air\_in - Tcond)$$

Where m_air represents mass flow rate of air, cp represents specific heat of air at respective air temperature, T_air_out represents temperature of outlet discharge air after indoor unit, T_air_in represents temperature of inlet air over indoor unit intake, Tcond represents condenser (outdoor unit) heat exchanger mid surface (copper tubes) temperature.

In some embodiments, the third power consumption data 26 can be obtained using the condenser capacity, the evaporator capacity and other power input data including indoor fan motor power input and outdoor fan motor power input. The indoor/outdoor fan motor power input can be obtained using a lookup table for fan motor power consumption from specification sheets of the HVAC system 10 provided by the supplier / manufacturers.

The method 800 for estimating power consumption of a heating, ventilation and air conditioning (HVAC) system (10) in a building comprises:

- a step 810 of collecting HVAC data 12 of the HVAC system 10 by a HVAC data collector 110;
- a step 820 of obtaining, by a processor 120, a first power consumption data 22 of the HVAC system 10 based on a plurality of capacity tables 14 of the HVAC system 10 and the collected HVAC data 12;
- a step 830 of obtaining, by the processor 120, a second power consumption data 24 of the HVAC system 10 based on the first power consumption data 22, the HVAC data 12, and a correction factor model 30, for estimating the power consumption of the HVAC system 10.

The method 800 can further include a step 840 of training, by the processor 120, the correction factor model 30 using the HVAC data 12, the first power consumption data 22 and a third power consumption data 26.

The HVAC data 12 can comprise indoor air temperature, outdoor air temperature and set temperature.

The at least one power input values for various combination of indoor air temperature, outdoor air temperature and set temperature of the capacity tables 14 of the HVAC system 10 can be obtained based on at least one statistical regression multivariable models.

The third power consumption data 26 can be obtained using indoor unit evaporator temperature, outdoor unit condenser temperature, and compressor running frequency collected by the HVAC data collector 110 and AHRI 10 test-based coefficient polynomials.

The third power consumption data 26 can be obtained using condenser capacity data and evaporator capacity data of the HVAC system 10.

Furthermore, one or more of the steps of a method described herein may be performed in parallel rather than sequentially.

In another aspect of the present disclosure, there is provided a computer program product comprising instructions which, when the program is executed by a computer, cause the computer to carry out: a step of obtaining a first power consumption data 22 of the HVAC system 10 based on a plurality of capacity tables 14 and HVAC data 12 of the HVAC system 10, wherein the HVAC data 12 is collected by a HVAC data collector 110; a step of obtaining a second power consumption data 24 of the HVAC system 10 based on the first power consumption data 22, the HVAC data 12, and a correction factor model 30, for estimating the power consumption of the HVAC system 10.

In another aspect of the present disclosure, there is provided a non-transitory computer-readable storage medium comprising instructions which, when executed by a computer, cause the computer to carry out: a step of obtaining a first power consumption data 22 of the HVAC system 10 based on a plurality of capacity tables 14 and HVAC data 12 of the HVAC system 10, wherein the HVAC data 12 is collected by a HVAC data collector 110; a step of obtaining a second power consumption data 24 of the HVAC system 10 based on the first power consumption data 22, the HVAC data 12, and a correction factor model 30, for estimating the power consumption of the HVAC system 10.

While the disclosure has been particularly shown and described with reference to specific embodiments, it should be understood by those skilled in the art that various changes in form and detail may be made therein without departing from the spirit and scope of the present disclosure as defined by the appended claims. The scope of the present disclosure is thus indicated by the appended claims and all changes which come within the meaning and range of equivalency of the claims are therefore intended to be embraced.

**Claims**

1.  A method (800) for estimating power consumption of a heating, ventilation and air conditioning (HVAC) system (10) in a building comprising:

    a step (810) of collecting HVAC data (12) of the HVAC system (10) by a HVAC data collector (110);
    a step (820) of obtaining, by a processor (120), a first power consumption data (22) of the HVAC system (10) based on a plurality of capacity tables (14) of the HVAC system (10) and the collected HVAC data (12);
    a step (830) of obtaining, by the processor (120), a second power consumption data (24) of the HVAC system (10) based on the first power consumption data (22), the HVAC data (12), and a correction factor model (30), for estimating the power consumption of the HVAC system (10).

2.  The method (800) of claim 1, further comprising:
    a step (840) of training, by the processor (120), the correction factor model (30) using the HVAC data (12), the first power consumption data (22) and a third power consumption data (26).

3.  The method (800) of claim 1, wherein the HVAC data (12) comprises indoor air temperature, outdoor air temperature and set temperature.

4.  The method (800) of claim 1, wherein at least one power input values for various combination of indoor air temperature, outdoor air temperature and set temperature of the capacity tables (14) of the HVAC system (10) are obtained based on at least one statistical regression multivariable models.

5.  The method (800) of claim 2, wherein the third power consumption data (26) is obtained using indoor unit evaporator temperature, outdoor unit condenser temperature, and compressor running frequency collected by the HVAC data collector (110) and AHRI 10 test-based coefficient polynomials.

6.  The method (800) of claim 2, wherein the third power consumption data (26) is obtained using condenser capacity data and evaporator capacity data of the HVAC system (10).

7.  A system (100) for estimating power consumption of a heating, ventilation and air conditioning (HVAC) system (10) in a building comprising:

    a HVAC data collector (110) configured to collect HVAC data (12) of the HVAC system (10);
    a processor (120) configured to:

    obtain a first power consumption data (22) of the HVAC system (10) based on a plurality of capacity tables (14) of the HVAC system (10) and the collected HVAC data (12);
    obtain a second power consumption data (24) of the HVAC system (10) based on the first power consumption data (22), the HVAC data (12), and a correction factor model (30), for estimating the power consumption of the HVAC system (10).

8.  The system (100) of claim 9, wherein the processor (120) is configured to:
    train the correction factor model (30) using the HVAC data (12), the first power consumption data (22) and a third power consumption data (26).

9.  A computer program product comprising instructions which, when the program is executed by a computer, cause the computer to carry out:

    a step of obtaining a first power consumption data (22) of the HVAC system 10 based on a plurality of capacity tables (14) and HVAC data (12) of the HVAC system (10), wherein the HVAC data (12) is collected by a HVAC data collector (110);
    a step of obtaining a second power consumption data (24) of the HVAC system (10) based on the first power consumption data (22), the HVAC data (12), and a correction factor model (30), for estimating the power consumption of the HVAC system (10).

10. A non-transitory computer-readable storage medium comprising instructions which, when executed by a computer, cause the computer to carry out:

a step of obtaining a first power consumption data (22) of the HVAC system 10 based on a plurality of capacity tables (14) and HVAC data (12) of the HVAC system (10), wherein the HVAC data (12) is collected by a HVAC data collector (110);

a step of obtaining a second power consumption data (24) of the HVAC system (10) based on the first power consumption data (22), the HVAC data (12), and a correction factor model (30), for estimating the power consumption of the HVAC system (10).

EP 4 446 955 A1

FIG. 1

FIG. 2

12 14

22 12 26

30

FIG. 3

800

```
┌─────────────────────────────────────────────────┐
│  collecting HVAC data (12) of the HVAC system (10)│ ─ 810
│         by a HVAC data collector (110)            │
└─────────────────────────────────────────────────┘
                        │
                        ▼
┌─────────────────────────────────────────────────┐
│      obtaining, by a processor (120), a first power│
│   consumption data (22) of the HVAC system (10)   │ ─ 820
│     based on a plurality of capacity tables (14) of the│
│   HVAC system (10) and the collected HVAC data (12)│
└─────────────────────────────────────────────────┘
                        │
                        ▼
┌─────────────────────────────────────────────────┐
│    obtaining, by the processor (120), a second power│
│    consumption data (24) of the HVAC system (10)  │
│   based on the first power consumption data (22), the│ ─ 830
│   HVAC data (12), and a correction factor model (30),│
│    for estimating the power consumption of the HVAC│
│                   system (10)                     │
└─────────────────────────────────────────────────┘
```

FIG. 4

Europäisches
Patentamt
European
Patent Office
Office européen
des brevets

# EUROPEAN SEARCH REPORT

Application Number

EP 23 16 7784

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2020 061875 A (CHUBU ELECTRIC POWER) 16 April 2020 (2020-04-16) | 1,2,7-10 | INV. G06Q10/06 F24F1/00 |
| Y | * paragraphs [0005], [0012], [0034]; figures 1-12 * | 3-6 | F24F11/46 G06Q10/063 |
| | ----- | | G06Q10/0631 |
| Y | JP 2020 020531 A (PANASONIC IP MAN CORP) 6 February 2020 (2020-02-06) | 3-6 | G06Q50/06 G16Y10/35 |
| | * paragraphs [0033], [0039], [0044], [0052], [0080], [0081]; figures 1-13 * | | G16Y20/10 G16Y20/30 |
| | ----- | | F24F130/10 F24F140/60 |

TECHNICAL FIELDS
SEARCHED      (IPC)

G06Q
F24F
G16Y

The present search report has been drawn up for all claims

| Place of search | Date of completion of the search | Examiner |
|---|---|---|
| Munich | 25 September 2023 | Bîrlescu, V |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 7784

This annex lists the patent family members relating to the patent documents cited in the above-mentioned European search report.
The members are as contained in the European Patent Office EDP file on
The European Patent Office is in no way liable for these particulars which are merely given for the purpose of information.

25-09-2023

| Patent document cited in search report | | Publication date | Patent family member(s) | | Publication date |
|---|---|---|---|---|---|
| JP 2020061875 | A | 16-04-2020 | JP | 7222650 B2 | 15-02-2023 |
| | | | JP | 2020061875 A | 16-04-2020 |
| | | | JP | 2023026487 A | 24-02-2023 |
| JP 2020020531 | A | 06-02-2020 | JP | 6735492 B2 | 05-08-2020 |
| | | | JP | 2020020531 A | 06-02-2020 |

EPO FORM P0459

For more details about this annex : see Official Journal of the European Patent Office, No. 12/82